# EUROPEAN PATENT SPECIFICATION

(11) **EP 3 441 183 B1**
(45) Date of publication and mention of the grant of the patent: **13.05.2020**
(21) Application number: 18185752.5
(22) Date of filing: 26.07.2018
(51) Int. Cl.: B23Q 1/52, B23Q 5/10, B23Q 16/02, F16H 53/00

(54) **POSITIONABLE ROTARY TABLE**
POSITIONIERBARER DREHTISCH
TABLE ROTATIVE POSITIONNABLE

(30) Priority: 02.08.2017 CZ 20170443
(43) Date of publication of application: 13.02.2019
(73) Proprietor: VÚTS, a.s., Liberec XI - Ruzodol I 460 01 Liberec (CZ)
(72) Inventor: Richter, Ales, 460 15 Liberec, Liberec XV-Stary Harcov (CZ); Tomas, Vaclav, 293 01 Mlada Boleslav, Mlada Boleslav III (CZ)
(74) Representative: Musil, Dobroslav

(56) References cited:
- CN-A- 105 240 485
- DE-U1- 29 514 343
- US-A- 3 153 355

## Description

### Technical field

A positionable rotary table, particularly a table of a machine tool, comprising a supporting disc for securing semi-finished products to be machined in a gradual stepwise process, whereby the disc comprises a drive device arranged below the level of the supporting disc, whereby the drive device includes a drive servo-motor with an output shaft, which is provided with a toothed pulley, and a cam, whose driven shaft, parallel to the output shaft of the servo-motor, is provided with a toothed pulley, the toothed pulleys being connected to each other by a backlash-free toothed belt, whereby a plurality of rotary rolling bodies are arranged near the circumference of the supporting disc, extending with their rotary portions downwards from the supporting disc, whereby the rotational axes lie on a circle whose axis is the axis of rotation of the supporting disc.

### Background art

In the production of machine parts, rotary tables of different sizes are often used. The bearing surface of a rotary table is the surface of a circular disc. The rotary table serves as a tool gripper, or, on the contrary, as a workpiece gripper, especially in mass production of machine parts by chip-formation.

During an automated tool change, the tool is removed from a carousel tool magazine, for example, by a robotic arm, which transfers it to a clamp of the machine tool. During automated machining, workpieces are fixed in the clamps arranged near the circumference of the rotary table. Their technological manufacturing process at the machining center consists of a series of successive operations performed by machining units, which are rigidly mounted at equal intervals around the circumference. The rotary table always turns between two adjacent machining units by the defined angle per step after an operation has been performed. It is obvious that such an operation requires not only precisely the same spacing between the workpiece clamps on the rotary table, but also exactly the same angular displacements of the rotary table between the individual machining operations. Achieving the minimum tolerance of the path of the individual angular displacements of the rotary table is essential for production accuracy.

A rotary table with a stepper drive according to DE29514343U1 is driven by an electric motor coupled by several V-belts to a shaft of a spiral worm of a worm gear mechanism, whose worm wheel is mounted on a shaft provided with a helical groove having a rectangular cross-section. The disc of the rotary table is provided with eight recesses located near the circumference, in which are mounted downwardly directed pins, whose diameter corresponds to the width of the helical groove to provide the necessary clearance for preventing the danger of the pins being pinched in the groove. Prior to terminating the contact of one pin with the helical groove, the next pin is brought into contact with the groove, the step of turning the rotary table is terminated and while operations are taking place on the individual workpieces clamped on the upper surface of the rotary table, the rotary table is stationary. It is apparent that due to possible slippage, transmission by means of V-belts does not guarantee the same paths of angular displacement of the table. Moreover, the alternating contacts of the pin circumference with one and the other side of the groove give rise to sliding friction and hence the wear and heating of the friction surfaces.

A rotary table drive comprising a toothed belt with toothed pulleys, connected to several pairs of interlocking gears, is disclosed in DE102005038663A1. From the point of view of the desired precision of the stepwise rotation, this solution is more suitable thanks to the belt and the pulleys with shape transmission. In addition, the device includes electronic control means which further increase the precision of stepwise rotation. However, the use of several other consecutive transmission pairs makes the drive device too complicated. As in the preceding solution, the drive of the disc itself also requires necessary clearance between the sides of the helical groove and the pin circumference.

The device according to DE10304462B4lt is better in terms of the precision of the steps of the rotary table rotation. A disc of the rotary table is rotatably arranged above an outer fixed stator of the rotary table. A row of electromagnets connected to a power source is arranged on the inner surface of the outer stator. On the outer surface of the rotor a row of permanent magnets is arranged. The drive of the rotary table is thus formed by an electric motor whose stator and rotor are the immediate basic parts of the rotary table. The stepwise motion is sensed by a measuring head mounted on the inside of the stator. Due to the high current load, this system must be complemented by an effective cooling system consisting of a pair of fans cooling the permanent magnets, as well as the electromagnets. This, of course, makes the device too complicated.

The device according to DE202005012908U1 discloses an electric motor drive, which, similarly to the previous solution, constitutes immediately the basic part of the rotary table. Here, however, the thermal load is so high that the device requires liquid cooling, which makes the device extremely complicated. The cooling device consists of cooling tubes, whereby one end of each tube is inserted by a heat conducting connection into a radial cavity of an internal stator and the other end is inserted into a radial cavity connected by a heat conducting connection to a stationary table. The rotary table disc is fixedly attached to the upper portion of the internal rotor.

The rotary table drive according to CN203171578U comprises a first drive electric motor mounted at the bottom of the machine frame, the rotary movement being transmitted by a relatively long camshaft drive belt to an input shaft of a cam mechanism controlling the stepwise rotation of the rotary table. Four rotary clamps are mounted ear the edge of its disc on the rotary table and are driven by second drive motors. An unillustrated belt drive between the first electric motor and the cam mechanism does not allow, without other means, to achieve exactly the same lengths of the steps of the rotary table.

The aim of the invention is to eliminate or at least reduce the drawbacks of the device of the prior art, particularly to achieve a very precise length of steps of rotation of the rotary table disc, while avoiding the need to use an active cooling device.

### Principle of the invention

The aim of the invention is achieved by a positionable rotary table whose supporting disc for securing semi-finished products to be machined in a gradual stepwise process is provided near its circumference with a plurality of rotary rolling bodies extending with their rotary rolling portions downwards from the supporting disc, whereby the axes of rotation of the rotary rolling bodies lie on a circle the axis of which is the axis of rotation of the supporting disc. The principle of the invention consists in that the rotary rolling bodies are arranged in pairs and the cam is an axial cam formed by a protrusion of a continuous helix, which has a length of at least two thread pitches, whereby the cross-section of the protrusion has the shape of a parallelogram whose side walls are at least partially in contact with the surfaces of at least one pair of rotary rolling bodies, whereby the cross-section of the protrusion has a defined variable shape over the entire length of the helix, the helix sides being structurally in permanent contact with the surfaces of at least one pair of rotary rolling bodies.

In the basic embodiment, the rotary rolling bodies have a cylindrical surface. Regarding the shape of the helix sides, from the point of view of minimizing the clearance between the cam surface and the sides of the rotary rolling bodies it is advantageous if the rotary rolling bodies have a barrel-shaped surface.

The mutual construction clearance between the circumferential surfaces of the rotary rolling bodies of one pair and the side of the helix protrusion corresponds to a precise clearance fit. This clearance fit ranges from IT5 to IT6.

The fundamental advantage of the solution according to the invention consists in that during the contacts of the circumferential surfaces of the rotary rolling bodies with the sides of the helix the mutually contacting surfaces move in the same direction.

### Description of drawings

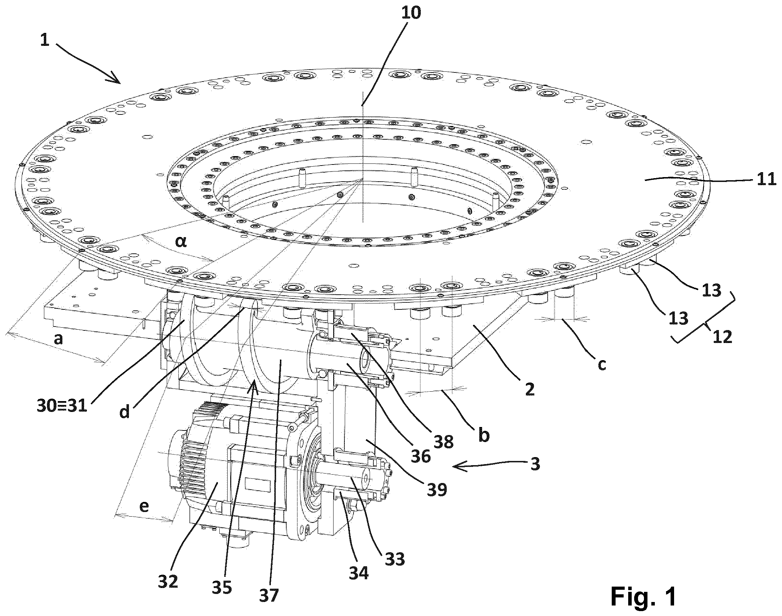

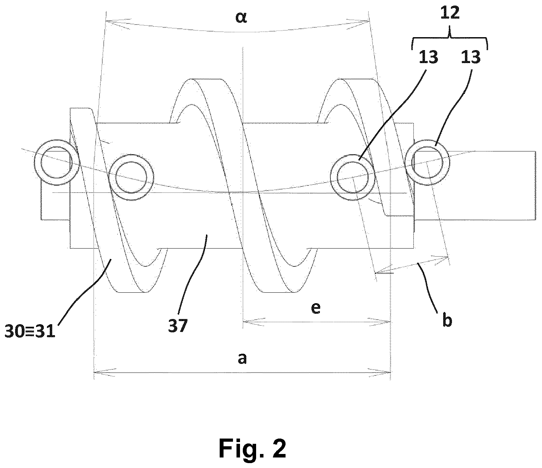

The solution of the invention is schematically represented in the drawing, wherein Fig. 1 is an oblique top view of a rotary table disc with a drive device, and Fig. 2 is a schematic plan view of a cam of a drive shaft and of rotary rolling bodies.

### Examples of embodiment

The rotary table of the device according to the invention serves to grip a row of workpieces which are to be machined in successive technological steps at several workstations of the machining center. In addition to the workstations, there is a point for clamping the semi-finished product and a point for removing the workpiece. The angle by which the rotary table rotates every time is identical, and so are the periods during which machining and manipulation operations are performed when the rotary table is stationary.

An exemplary embodiment of the device according to the invention is schematically represented by means of its basic parts in Fig. 1. The rotary table **1** has a vertical axis **10** of rotation, the upper surface of its supporting disc **11** being provided with unillustrated means for clamping the workpieces, which are mutually arranged at the same angular spacings. The disc **11** is positioned in a known manner relative to a stable frame **2** in an axial-radial bearing (not shown).

In the vicinity of the circumference of the supporting disc **11**, a plurality of pairs **12** of rotary rolling bodies **13** - in the illustrated embodiment sixteen pairs - are arranged on a circle concentric with the vertical axis of the rotary table **1** in an unillustrated manner on fixed pins inserted into the supporting disc **11** and extending downwards from the lower surface of the supporting disc **11.** The centers of the pairs **12** are evenly spaced at exactly identical spacings **a.** In an exemplary embodiment, a = 195.09 mm, which corresponds to the center angle of the supporting disc 11a = 22.5 °. The mutual pitch distance **b** of the axes of the rotary rolling bodies **13** is 50 mm and the diameter of the outer surface of the rotary rolling bodies **13** projecting downwards from the lower surface of the supporting disc **11** is 30 mm, these dimensions being the same with respect to all the pairs **12** with great precision. In a preferred embodiment, the circumferential surface of the rotary rolling elements **13** is cylindrical.

In the space below the supporting disc **11** is arranged a drive device **3** of the rotary table **1** mounted on a stable frame **2.** The drive device **3** comprises an axial cam **30** formed by a helix **31** and is driven by a servo-motor **32**, whose output shaft **33** is fixedly connected to a toothed pulley **34.** The axial cam **30** is situated above the servo-motor **32.** In a plan view, the longitudinal axis of the axial cam **30** is substantially tangential to the pitch circle of the axes of the rotary rolling bodies **13** and is parallel to the axis of the output shaft **33** of the servo-motor **32.**

The axial cam **30** has approximately two threads. With respect to the same distance **b** of the axes of the rotary rolling bodies **13** and to the pitch of the helix of the axial cam **30** the cross-section of the protrusion **35**, or, more specifically, the mutual distance of its sides, is variable along the length of the helix. The mutual distance of the sides of the protrusion **35**, that is to say its width **d**, is by a minimum construction clearance smaller than the difference in the mutual axial distance **b** of the rotary rolling bodies **13** of one pair **12** and the outer diameter of the rotary rolling bodies **13.** In the exemplary embodiment, this clearance between the sides of the rotary rolling bodies **13** and the sides of the protrusion **35** ranges from 0 to 0.01 mm. In the exemplary embodiment, at the width of the protrusion **35** of the helix **d** = 16-20 mm, this corresponds to accurate clearance fit with the accuracy degree according to International Tolerance Grade table ISA at the level IT5 to IT6.

In another preferred embodiment, the circumferential surface of the rotary rolling bodies **13** is barrel-shaped due to the variable cross-section of the helix of the axial cam **30.**

The pitch **e** of the helix **31** is also variable due to the kinematic connections between the rotary rolling bodies **13** and the sides of the cam **30.** However, the transmission between the servo-motor **32** and the supporting disc **11** is constant and uniform. The driven end **36** of the shaft **37** of the helix **31** located above the output shaft **33** of the servo-motor **32** is fixedly connected to a toothed pulley **38.** The toothed belt **34** of the servo-motor **32** is connected to the toothed pulley **38** of the axial cam **35** by a backlash-free toothed belt **39.**

In the known process consisting of successive machining operations, all the clamping positions of the rotary table **1** are occupied by the same semi-finished products, from which in the same manufacturing process consisting of five successive machining steps in the exemplary embodiment, the same workpieces are produced successively at five workstations. These operations at five positions are preceded by the manipulation step of clamping a new semi-finished product and are followed by the manipulation step of removing the finished workpiece.

Fig. 2 shows a schematic detailed top view of an axial cam **30** and the rotary rolling bodies **13** of two pairs **12** of these bodies.

Production accuracy is conditioned by the precision of the mutual position of the workpiece on the rotary table **1** and the working position of the machine tool. One step in the exemplary process comprises the handling stage for moving the rotary table **1** by turning the rotary table by one workstation, and the machining stage, during which the rotary table **1** is stationary. Any deviation from the determined relative position of the workpiece and the workstation of the machine results in producing a defective product.

The device according to the invention is advantageous also because of a very short duration of the individual cycles. In the device according to the invention, the moment of inertia "I" of the rotating part of the rotary table of I = 100 kg.m² can be achieved, the repeated positioning accuracy of the rotary table **11** being reliably within ± 3 arcsec.

These parameters result from a fundamental advantage of the device according to the invention, which is the arrangement of the axial cam **30,** whose protrusion **35** is located between the sides of the two rotary rolling bodies **13.** In this configuration, the direction of movement of the circumference of the rotary rolling body **13** is the same as that of the sides of the protrusions **35** with which the circumferential surface of the rotating rolling body **13** is currently in contact. This contact takes place without significant sliding friction, whereby the purely rolling friction between the rotary rolling bodies **13** and the sides of the protrusions **35** of the rotating axial cam **30** enables to minimize their mutual clearance.

### List of references

- 1: rotary table
- 11: supporting disc (of the rotary table)
- 12: pair of rolling bodies
- 13: rotary rolling body
- 2: stable machine frame
- 3: drive device
- 30: cam
- 31: helix (constituting the cam)
- 32: servo-motor
- 33: output shaft (of the electric motor)
- 34: toothed pulley (of the electric motor)
- 35: protrusion (of the helix)
- 36: driven end of the shaft of the axial cam
- 37: shaft of the axial cam
- 38: toothed belt (of the shaft of the axial cam)
- 39: toothed belt (of the drive device)
- a: mutual spacing of two adjacent pairs of rotary rolling bodies
- b: mutual distance of the axes of the rotary rolling bodies of one pair
- c: diameter of the outer surface of the rotary rolling body
- d: width of the protrusion of the helix
- e: helix pitch (of the axial cam)
- α: central angle (relative to the centers of two adjacent pairs of rotary rolling bodies)

## Claims

1. A positionable rotary table (1), particularly a table of a machine tool, comprising a supporting disc (11) for securing semi-finished products to be machined in a gradual stepwise process, the supporting disc comprising a drive device (3) arranged below the level of the supporting disc (11), whereby the drive device (3) consists of a drive servo-motor (32) with an output shaft (33) provided with a toothed pulley (34) and a cam (30) whose driven shaft (37), which is parallel to an output shaft of the servo-motor (32), is provided with a toothed pulley (38), the toothed pulleys (34, 38) being connected to each other by a backlash-free toothed belt, whereby near the circumference of the supporting disc (11) are arranged a plurality of rotary bodies (13) extending with their rotary portions downwards from the supporting disc (11), whereby their axes of rotation lie on a circle the axis of which is the axis (10) of rotation of the supporting disc (11), wherein the rotary rolling bodies (13) are arranged in pairs (12) and the cam (30) is an axial cam formed by a protrusion (35) of a continuous helix (31) having a length of at least two thread pitches, whereby the cross-section of the protrusion (35) has the shape of a parallelogram whose side walls are at least partially in contact with the surfaces of at least one pair of rotary rolling bodies (13), whereby the cross-section of the protrusion (35) has over the entire length of the helix (31) a defined variable shape, the sides of the helix (31) being structurally in permanent contact with the surfaces of at least one pair (12) of rotary rolling bodies (13).

2. The positionable rotary table (1) according to claim 1, wherein the rotary rolling bodies (13) have a cylindrical surface.

3. The positionable rotary table (1) according to claim 1, wherein the rotary rolling bodies (13) have a barrel-shaped surface.

4. The positionable rotary table (1) according to any of the preceding claims, wherein the mutual construction clearance between the circumferential surfaces of the rotary rolling bodies (13) of one pair (12) and the sides of the protrusion (35) of the helix (31) corresponds to precise clearance fit.

5. The positionable rotary table (1) according to claim 4, wherein precise clearance fit corresponds to the accuracy grade in the range from IT5 to IT6.

## Patentansprüche

1. Verstellbarer Drehtisch (1), insbesondere ein Tisch einer Bearbeitungsmaschine, der einen Tragteller (11) zur Aufnahme von Werkstücken zu ihrer kontinuierlichen Schrittbearbeitung aufweist, der eine Antriebsvorrichtung (3) aufweist, die unter dem Niveau des Tragtellers (11) angeordnet ist, wobei die Antriebsvorrichtung (3) einen Antriebsservomotor (32) mit einer Ausgangswelle (33) aufweist, die eine Zahnriemenscheibe (34) und einen Nocken (30) aufweist, dessen mit der Ausgangswelle des Servomotors (32) parallel laufende angetriebene Welle (37) eine Zahnriemenscheibe (38) aufweist, wobei die Zahnriemenscheiben (34, 38) durch einen spielfreien Zahnriemen verbunden sind, wobei in der Nähe des Umfangs des Tragtellers (11) eine Vielzahl von drehbaren Rotationskörpern (13) angeordnet ist, die mit dem drehbaren Rotationsteil nach unten aus dem Tragteller (11) hinaustreten, wobei ihre Drehachsen auf einer Kreislinie liegen, deren Achse die Drehachse (10) des Tragtellers (11) ist, wobei die drehbaren Rotationskörper (13) in Paaren (12) angeordnet sind und der Nocken (30) ein Axialnocken ist, der durch einen Vorsprung (35) einer durchgehenden Wendel (31) gebildet wird, die eine Länge von mindestens zwei Gewindesteigungen besitzt, wobei der Querschnitt des Vorsprungs (35) eine Form eines Parallelogramms aufweist, dessen seitliche Wände mit mindestens ihrem Teil mit den Oberflächen von mindestens einem Paar der drehbaren Rotationskörper (13) in Berührung stehen, wobei der Querschnitt des Vorsprungs (35) in der ganzen Länge der Wendel (31) eine definiert veränderliche Form aufweist, wobei die Seiten der Wendel (31) konstruktionsbezogen in einer permanenten Berührung mit den Oberflächen von mindestens einem Paar (12) der drehbaren Rotationskörper (13) stehen.

2. Verstellbarer Drehtisch (1) nach dem Anspruch 1, **wobei** die drehbaren Rotationskörper (13) eine zylindrische Oberfläche aufweisen.

3. Verstellbarer Drehtisch (1) nach dem Anspruch 1, **wobei** die drehbaren Rotationskörper (13) eine tonnenförmige Oberfläche aufweisen.

4. Verstellbarer Drehtisch (1) nach einem der vorangehenden Ansprüche, **wobei** das gegenseitige Konstruktionsspiel zwischen den Umfangsoberflächen der drehbaren Rotationskörper (13) von einem Paar (12) und Seiten des Vorsprungs (35) der Wendel (31) einer genauen Bewegungslagerung entspricht.

5. Verstellbarer Drehtisch (1) nach dem Anspruch 4, **wobei** die genaue Bewegungslagerung der Genauigkeitsstufe IT5 bis IT6 entspricht.

## Revendications

1. Table tournante réglable (1), notamment une table de machine-outil comprenant une plaque de support (11) pour fixer les demi-produits à leur usinage pas à pas, qui comprend le mécanisme de mouvement (3) disposée en dessous du niveau de la plaque de support (11), tandis que le mécanisme de mouvement (3) comprend un servomoteur de mouvement (32) avec un arbre de sortie (33) muni d'une poulie dentée (34) et d'une came (30), l'arbre actionné (37) parallèle à l'arbre de sortie du servomoteur (32) est pourvu d'une poulie dentée (38), tandis que les poulies dentées (34, 38) sont reliées par une courroie dentée sans jeu, tandis que près de la périphérie de la plaque de support (11) une pluralité de corps rotatifs pivotants (13) est disposée en s'étendant vers le bas depuis la plaque de support (11), tandis que leurs axes de la rotation reposent sur un cercle dont l'axe est l'axe de la rotation (10) de la plaque de support (11), tandis que les corps rotatifs pivotants (13) sont disposés par paires (12) et la came (30) est une came axiale formée par une saillie (35) d'une hélice continue (31) ayant une longueur d'au moins deux pas de filetage, tandis que la section transversale de la saillie (35) a la forme d'un parallélogramme dont les parois latérales sont au moins par une partie en contact avec les surfaces d'au moins une paire des corps rotatifs pivotants (13), tandis que la section transversale de la saillie (35) a une forme variable définie sur toute la longueur de l'hélice (31), tandis que les côtés de l'hélice (31) sont du point de vue de la construction en contact avec les surfaces de l'au moins une paire (12) des corps rotatifs pivotants (13).

2. Table rotative à positions multiples (1) selon la revendication 1, tandis que les corps rotatifs pivotants (13) ont une surface cylindrique.

3. Table rotative à positions multiples (1) selon la revendication 1, **tandis que** les corps rotatifs pivotants (13) ont une surface en forme de tonneau.

4. Table tournante à positions multiples (1) selon l'une quelconque des revendications précédentes, **tandis que** du point de vue de la construction le jeu relatif entre les surfaces périphériques des corps rotatifs pivotants (13) d'une paire (12) et les côtés de la saillie (35) de l'hélice (31) correspond à un ajustement du positionnement mobile précis.

5. Table rotative à positions multiples (1) selon la revendication 4, **tandis que** l'ajustement du positionnement mobile précis correspond au degré de précision de IT5 à IT6.
